# EUROPÄISCHE PATENTANMELDUNG

(11) **EP 0 620 510 A1**
(43) Veröffentlichungstag der Anmeldung: **19.10.1994**
(21) Anmeldenummer: 93106138.6
(22) Anmeldetag: 15.04.1993
(51) Int. Cl.: G05B 19/05

(54) **Elektrisches Gerät mit konfigurierbarer Schnittstelle**

(71) Anmelder: SIEMENS AKTIENGESELLSCHAFT, D-80333 München (DE)
(72) Erfinder: Mössner, Rudolf, Dipl.-Ing. (FH), W-8460 Schwandorf (DE); Bock, Günther, Dipl.-Ing. (Univ.), W-8451 Kümmersbruck (DE)

(57) **Zusammenfassung**

Die vorliegende Erfindung betrifft ein elektrisches Gerät, insbesondere eine speicherprogrammierbare Steuerung, mit einer signalverarbeitenden Intelligenz (2), z. B. einem Mikroprozessor (2), und mindestens einer Schnittstelle zum Senden und/oder Empfangen von digitalen Signalen mit Schnittstellenanschlüssen (17,17') zum Anschließen externer Leitungen, z. B. einer Busverbindung. Erfindungsgemäß ist zwischen der Intelligenz (2) und den Schnittstellenanschlüssen (17,17') eine konfigurierbare Schaltung (9,9') angeordnet. Dadurch ist die Schnittstelle erheblich universeller verwendbar als bisher.

## Beschreibung

Die vorliegende Erfindung betrifft ein elektrisches Gerät, insbesondere eine speicherprogrammierbare Steuerung, mit einer signalverarbeitenden Intelligenz, z. B. einen Mikroprozessor, und mindestens einer Schnittstelle zum Senden und/oder Empfangen von digitalen Signalen mit Schnittstellenanschlüssen zum Anschließen externer Leitungen, z.B. einer Busverbindung.

Derartige Geräte sind weit verbreitet. Beispiele derartiger Geräte sind speicherprogrammierbare Steuerungen mit ihren verschiedenen Prozeß- und Kommunikationsschnittstellen.

Prozeß- und Kommunikationsschnittstellen erfordern oft eine hohe Leistungsfähigkeit, insbesondere bezüglich der Signalverarbeitungsgeschwindigkeit. Dadurch können diese Schnittstellen oftmals nicht direkt von Standardprozessoren bedient werden. Daher werden im stand der Technik für derartige Schnittstellen individuell zugeschnittene Hardwareanschaltungen verwendet. Meist wird für jede Anschaltung sogar ein besonderes ASIC verwendet, da ansonsten die geforderte Signalverarbeitungsgeschwindigkeit nicht erreichbar ist. Beispiele derartiger Anschaltungen sind Winkelschrittgeber, Ultraschallwegerfassungsmodule, Barcodeleser, Absolutwegerfassungsmodule und Kommunikationsprozessoren. Manche dieser Schnittstellen können darüber hinaus mit mehreren verschiedenen Protokollen betrieben werden. Je nach Schnittstelle wird sogar für jedes Protokoll eine eigene, spezielle Anschaltung benötigt.

Es ist offensichtlich, daß aufgrund der Vielzahl von erforderlichen Anschaltungen hohe Entwicklungs- und auch Lagerhaltungskosten entstehen.

Die Aufgabe der vorliegenden Erfindung besteht folglich darin, eine universell einsetzbare Schnittstelle zur Verfügung zu stellen, so daß unterschiedliche Schnittstellen mit einer einzigen Anschaltung realisiert werden können.

Die Aufgabe wird dadurch gelöst, daß zwischen der Intelligenz und den Schnittstellenanschlüssen eine konfigurierbare Schaltung angeordnet ist, d.h., daß die hardwaremäßige Schaltung der Schnittstelle nicht bereits bei der Herstellung der Schaltung, sondern erst bei der Verwendung der Schaltung festgelegt wird.

Wenn die konfigurierbare Schaltung softwarekonfigurierbar ist, ist die Konfigurierung der Schaltung besonders einfach. Insbesondere ist die Konfigurierung dann programmgesteuert möglich.

Vorzugsweise ist die konfigurierbare Schaltung in einen integrierten Schaltkreis integriert, z. B. als field programmable gate array (FPGA) ausgebildet. FPGAs werden beispielsweise von der Firma Xilinx hergestellt und vertrieben. Ihr Aufbau und ihre Wirkungsweise ist z. B. in der EP-0 410 759-A2 beschrieben.

Zur Entlastung der signalverarbeitenden Intelligenz ist der Schnittstelle vorzugsweise eine signalvorverarbeitende Intelligenz, z. B. ein Mikrocontroller, zugeordnet. Die signalvorverarbeitende Intelligenz kann dabei in denselben integrierten Schaltkreis wie die konfigurierbare Schaltung integriert sein.

Wenn der konfigurierbaren Schaltung ein Remanentspeicher, z. B. ein EEPROM oder ein gepuffertes RAM, zum Abspeichern mindestens eines Konfigurationsdatensatzes zugeordnet ist, kann sich die konfigurierbare Schaltung bei einem Start des Systems selbsttätig konfigurieren.

Weitere Vorteile und Einzelheiten ergeben sich aus der nachfolgenden Beschreibung eines Ausführungsbeispiels, anhand der Zeichnung sowie in Verbindung mit den weiteren Unteransprüchen. Dabei zeigt:

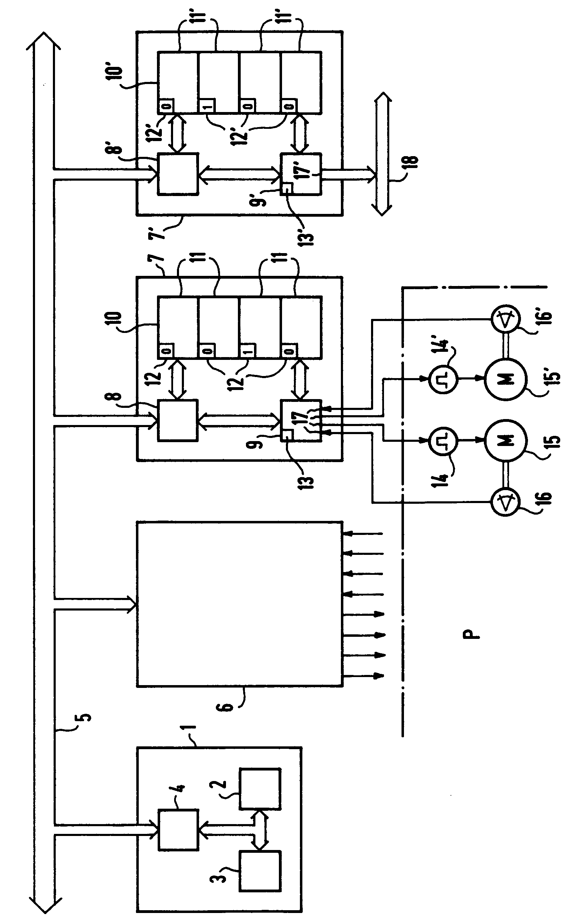

- FIG 1: eine modular aufgebaute speicherprogrammierbare Steuerung.

Die speicherprogrammierbare Steuerung als Beispiel eines elektrischen Geräts besteht gemäß FIG 1 aus einer Zentraleinheit 1, die einen technischen Prozeß P steuert und überwacht. Die Zentraleinheit 1 weist hierzu als signalverarbeitende Intelligenz einen Mikroprozessor 2 auf, der ein Anwenderprogramm abarbeitet, das im Speicher 3 abgespeichert ist. Die Kommunikation des Mikroprozessors 2 mit dem Prozeß P erfolgt über den Mikrocontroller 4, den Rückwand- oder Systembus 5 der speicherprogrammierbaren Steuerung und die Baugruppen 6, 7 und 7'.

Die Baugruppe 6 ist eine konventionelle Ein-/Ausgabebaugruppe, an die, wie in FIG 1 angedeutet, Aktoren und Sensoren angeschlossen sind. Die Baugruppen 7 und 7' sind dagegen intelligente Baugruppen. Sie sind baugleich.

Die Baugruppen 7 und 7' weisen als signalvorverarbeitende Intelligenz Mikrocontroller 8, 8' sowie konfigurierbare Schaltungen 9, 9' auf. Die konfigurierbaren Schaltungen 9, 9' sind im vorliegenden Fall field programmable gate arrays (FPGAs). Anstelle von FPGAs sind aber auch andere konfigurierbare Schaltungen verwendbar, wenn sie die ein- bzw. ausgehenden Signale schnell genug verarbeiten und weiterleiten können.

Im Gegensatz zum Stand der Technik, bei dem speziell für den jeweiligen Verwendungszweck angepaßte Bausteine, z. B. ASICs, eingesetzt werden, werden also bei der vorliegenden Erfindung universell einsetzbare Mikrocontroller 8, 8' und konfigurierbare Schaltungen 9, 9' verwendet. Je nach Verwendung können die Mikrocontroller 8, 8' sogar entfallen, die konfigurierbaren Schaltungen 9, 9' also sogar direkt mit dem Mikroprozessor 2 verbunden sein.

Ferner weisen die Baugruppen 7, 7' Remanentspeicher 10, 10' auf, die in mehrere Speicherbereiche 11, 11' unterteilt sind. Jedem der Speicherbereiche 11, 11' ist dabei ein Flag 12, 12' zugeordnet. In den Speicherbereichen 11, 11' sind Konfigurationsdatensätze für die konfigurierbaren Schaltungen 9, 9' abgespeichert. Mittels der Flags 12, 12' ist festlegbar, daß der Inhalt des Speicherbereichs 11, 11', dessen zugehöriges Flag 12, 12' den Wert Eins hat, in den FPGA-internen Speicher 13, 13' geladen wird.

Die Speicher 10, 10' sind, wie bereits erwähnt, Remanentspeicher. Sie sind beispielsweise als EEPROMs oder als gepufferte RAMs ausgebildet. Sie sind über die Mikrocontroller 8, 8' les- und schreibbar. Bei einem Reset bzw. bei einem Start kann daher der voreingestellte Speicherbereich 11, 11' über die Mikrocontroller 8, 8' in die FPGA-internen Speicher 13, 13' geladen werden. Ebenso ist es aber auch möglich, daß die konfigurierbaren Schaltungen 9, 9' ihre Konfigurationsdaten bei einem Neustart selbst aus den Speichern 10, 10' auslesen. In beiden Fällen sind die konfigurierbaren Schaltungen 9, 9' mittels der in den Speichern 10, 10' gespeicherten Software konfigurierbar.

Die Inhalte der Speicher 10, 10' sind bis auf die Flags 12, 12' identisch. Von den Flags 12, 12' ist pro Speicher 10, 10' nur eines auf Eins gesetzt, die anderen haben den Wert Null. Die Speicherbereiche 11, 11', deren Flags 12, 12' den Wert Eins haben, sind die voreingestellten Speicherbereiche, die bei einem Neustart in die Speicher 13, 13' übertragen werden.

Bei einem Neustart wird daher in den Speicher 13 der Inhalt des dritten der Speicherbereiche 11 übertragen. In diesem Speicherbereich 11 sind die Konfigurationsdaten für die konfigurierbare Schaltung 9 abgespeichert, mittels derer die konfigurierbare Schaltung 9 zwei digitale Lageregelungen realisiert. Bei dieser Konfiguration steuert der Mikrocontroller 8 über die konfigurierbare Schaltung 9 und die Ansteuerungen 14, 14', also die Schrittmotoren 15, 15' an. Ebenso werden die Signale der Winkelschrittgeber 16, 16' über die konfigurierbare Schaltung 9 an den Mikrocontroller 8 gemeldet und dort vorverarbeitet. Die Ansteuerungen 14, 14' und die Winkelschrittgeber 16, 16' sind also über die Schnittstellenanschlüsse 17 mit der konfigurierbaren Schaltung 9, nicht aber direkt mit dem Mikrocontroller 8 verbunden.

Bei der Baugruppe 7' ist dagegen das Flag 12' des zweiten Konfigurationsdatensatzes gesetzt. Dieser Konfigurationsdatensatz konfiguriert die konfigurierbare Schaltung 9' derart, daß sie als UART-Schnittstelle (UART = universal asynchronous receiver/transmitter), z. B. als RS485-Schnittstelle, wirkt. Die speicherprogrammierbare Steuerung ist somit über die Schnittstellenanschlüsse 17' an einen Feldbus 18, z. B. den Sinec-L2-Bus, anschließbar.

In anderen Speicherbereichen 11, 11' sind Konfigurationsdatensätze für andere Anwendungen der Baugruppen 7, 7' abgespeichert. Beispiele derartiger Anwendungen sind die Ultraschallwegerfassung, Barcodeleser, oder Absolutwegerfassung und Pulsweitenmodulation. Auch eine SSI (SSI = serial synchronous interface) zum Anschluß intelligenter Signalgeber ist realisierbar.

Beim obenstehenden Ausführungsbeispiel wurden getrennte Bausteine für konfigurierbare Schaltung 9, 9', Mikrocontroller 8, 8' und Remanentspeicher 10, 10' verwendet. Es ist aber selbstverständlich auch möglich, Mikrocontroller 8, 8' und konfigurierbare Schaltung 9, 9' in einem einzigen integrierten Schaltkreis zusammenzufassen. Dieser gemeinsame integrierte Schaltkreis kann gegebenenfalls auch den Speicher 10, 10' enthalten.

Abschließend sei noch erwähnt, daß in den Remanentspeichern 10, 10' auch nur je ein Datensatz abgespeichert sein kann. Die Speicher 10, 10' können auch in die konfigurierbaren Schaltungen 9, 9' integriert sein. Das Entscheidende ist, daß die Schaltungen 9, 9' durch die in den Speichern 10, 10' abgespeicherten Konfigurationsdatensätze konfigurierbar sind und so eine große Flexibilität und Anpaßbarkeit der konfigurierbaren Schaltungen 9, 9' gegeben ist.

## Patentansprüche

1. Elektrisches Gerät, insbesondere speicherprogrammierbare Steuerung, mit einer signalverarbeitenden Intelligenz (2), z. B. einem Mikroprozessor (2), und mindestens einer Schnittstelle zum Senden und/oder Empfangen von digitalen Signalen mit Schnittstellenanschlüssen (17,17') zum Anschließen externer Leitungen, z. B. einer Busverbindung, **dadurch gekennzeichnet,** daß zwischen der Intelligenz (2) und den Schnittstellenanschlüssen (17,17') eine konfigurierbare Schaltung (9,9') angeordnet ist.

2. Elektrisches Gerät nach Anspruch 1, **dadurch gekennzeichnet,** daß die konfigurierbare Schaltung (9,9') als softwarekonfigurierbare Schaltung ausgebildet ist.

3. Elektrisches Gerät nach Anspruch 1 oder 2, **dadurch gekennzeichnet,** daß die konfigurierbare Schaltung (9,9') in einen integrierten Schaltkreis integriert ist.

4. Elektrisches Gerät nach Anspruch 3, **dadurch gekennzeichnet,** daß der integrierte Schaltkreis (9,9') als field programmable gate array ausgebildet ist.

5. Elektrisches Gerät nach einem der obigen Ansprüche, **dadurch gekennzeichnet,** daß der Schnittstelle eine signalvorverarbeitende Intelligenz (8,8'), z. B. ein Mikrocontroller (8,8'), zugeordnet ist.

6. Elektrisches Gerät nach Anspruch 5, **dadurch gekennzeichnet,** daß die konfigurierbare Schaltung (9,9') und die signalvorverarbeitende Intelligenz (8,8') in denselben integrierten Schaltkreis integriert sind.

7. Elektrisches Gerät nach einem der obigen Ansprüche, **dadurch gekennzeichnet,** daß der konfigurierbaren Schaltung (9,9') ein Remanentspeicher (10,10') zum Abspeichern mindestens eines Konfigurationsdatensatzes zugeordnet ist.

8. Elektrisches Gerät nach Anspruch 7, **dadurch gekennzeichnet,** daß in dem Remanentspeicher (10,10') mehrere Konfigurationsdatensätze abspeicherbar sind.

9. Elektrisches Gerät nach Anspruch 8, **dadurch gekennzeichnet,** daß der Remanentspeicher (10,10') mindestens einen Speicherbereich (12,12') zum Abspeichern einer Voreinstellung aufweist.

10. Elektrisches Gerät nach einem der obigen Ansprüche, **dadurch gekennzeichnet,** daß die konfigurierbare Schaltung (9,9') mindestens einen Speicher (13,13') aufweist.
